# EUROPÄISCHE PATENTANMELDUNG

(11) **EP 0 987 155 A2**
(43) Veröffentlichungstag der Anmeldung: **22.03.2000**
(21) Anmeldenummer: 99118134.8
(22) Anmeldetag: 11.09.1999
(51) Int. Cl.: B60S 3/00

(54) **Fahrzeugwaschanlage**

(30) Priorität: 15.09.1998 DE 29816533 U
(71) Anmelder: California Kleindienst Holding GmbH, 86153 Augsburg (DE)
(72) Erfinder: Windel, Günter, 63825 Scheppenbach (DE)
(74) Vertreter: Ernicke, Hans-Dieter, Dipl.-Ing.

(57) **Zusammenfassung**

Die Erfindung betrifft eine Fahrzeugwaschanlage (1) mit mindestens einem beweglichen Portal (2), das als offenes Rohrgestell mit zwei U-förmigen Rohrbügeln (5,6) ausgebildet ist, wobei die Rohrbügel (5,6) im Fuß- und Kopfbereich miteinander verbunden sind. Die Rohrbügel (5,6) sind quer zur Fahrtrichtung (39) angeordnet und weisen in der Mitte gegeneinander gerichtete Krümmungen (7) und ein mittiges Verbindungsteil (8) auf. An einem zwischen den Rohrbügeln (5,6) angeordneten Querträger (15) ist eine Bürstenwascheinrichtung (12) verfahrbar angeordnet.

## Beschreibung

Die Erfindung betrifft eine Fahrzeugwaschanlage mit den Merkmalen im Oberbegriff des Hauptanspruchs.

Derartige Waschanlagen sind aus der Praxis bekannt. Sie sind als sogenannte Portalwaschanlagen ausgebildet, die mit mindestens einem beweglichen Portal ausgerüstet sind, das sich gegenüber dem stehenden Fahrzeug bewegt. Die bekannten Portale sind mit Verkleidungen versehene Gerüstkonstruktionen, die zum einen einen erheblichen Bauaufwand haben und zum anderen eine voluminöse Form besitzen. Die Formgebung kann sich ungünstig auf die Kundenakzeptanz auswirken.

Es ist Aufgabe der vorliegenden Erfindung, eine bessere Fahrzeugwaschanlage aufzuzeigen.

Die Erfindung löst diese Aufgabe mit dem Merkmalen im Hauptanspruch.
Die erfindungsgemäße offene Rohrkonstruktion hat verschiedene Vorteile. Zum einen wirkt sie luftig und filigran, was die Kundenakzeptanz, insbesondere bei Frauen, erhöht. Außerdem fühlt sich der Kunde beim Einfahren in die Waschanlage und unter das Portal sicherer. Im weiteren bietet die erfindungsgemäße Waschanlage eine Vielzahl von Gestaltungsmöglichkeiten für das Design. Dadurch sind nicht nur farbliche, sondern auch gestalterische Anpassungen an Wünsche der Betreiber möglich. Die Waschanlage selbst stellt schon ein neues Design dar, das sich als Blickfang für Waschkunden präsentiert.

Von Vorteil ist der verringerte Bauaufwand. Das Rohrgestell ist einfacher als die bisher üblichen Portalkonstruktionen herzustellen. Es hat außerdem durch die Verbindungen im Fuß- und Kopfbereich eine hohe Stabilität und Steifigkeit. Dadurch ist es trotz seiner filigranen Konstruktion in der Lage, auch schwere und kraftaufwendige Waschaggregate, wie Waschbürsten zu tragen und abzustützen.

Bei der erfindungsgemäßen Fahrzeugwaschanlage sind vorzugsweise außer dem Rohrgestell nur wenige Anlagenteile für den Waschkunden sichtbar. In der bevorzugten Ausführungsform sind dies nur die Waschbürsten und die Trockeneinrichtung. Diese Aggregate können ebenfalls als Designelemente wirken und sind dazu in der beanspruchten Weise ausgebildet. Optische Vorteile ergeben sich ferner durch die Unterbringung der Sprüheinrichtungen in den Rohren des Portals. Für eine filigrane Erscheinung der Fahrzeugwaschanlage ist es ferner günstig, wenn die Steuerung und die Betriebsmittelversorgung außerhalb des Portals angeordnet sind, wobei nur eine für den Waschkunden kaum sichtbare Leitungsverbindung zum Portal besteht. Hierbei empfiehlt es sich auch aus optischen Gründen, die Leitungen möglichst stark gebündelt zentral auf den Kopfbereich des Portals zu einer dortigen in der Mitte angeordneten Verteilung zu führen. Von dort aus können die Leitungen für Betriebsmittel, wie Wasser, Reinigungsmittel, Shampoo und für Energie und Signale in den Rohren zu den einzelnen Aggregaten geführt werden. Aufwendige Verkleidungen sind bei der Waschanlage dadurch entbehrlich.

Von besonderem Vorteil in optischer und funktioneller Hinsicht sind die Gestaltung der Bürstenwascheinrichtung und der Trockeneinrichtung. Die einzeln angeordneten schwenkbaren Trockendüsen bieten nicht nur eine hervorragende Trockenleistung, sondern unterstützen durch ihre kleine und ansprechende Gestaltung das Gesamtdesign der Anlage. Die Bürstenwascheinrichtung ist ebenfalls filigran ausgebildet. Hierzu tragen auch die kleinbauenden Antriebe, insbesondere der Hubantrieb mit dem Riemenwickel für die Dachbürste bei. Der Riemenwickel hat zudem den Vorteil einer besonders einfachen und zuverlässigen Konstruktion. Die Riemen sind kaum sichtbar und brauchen nur wenig Platz. Außerdem ist die Betriebssicherheit und Steuerungsgenauigkeit hoch.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Fahrzeugwaschanlage in Stirnansicht,

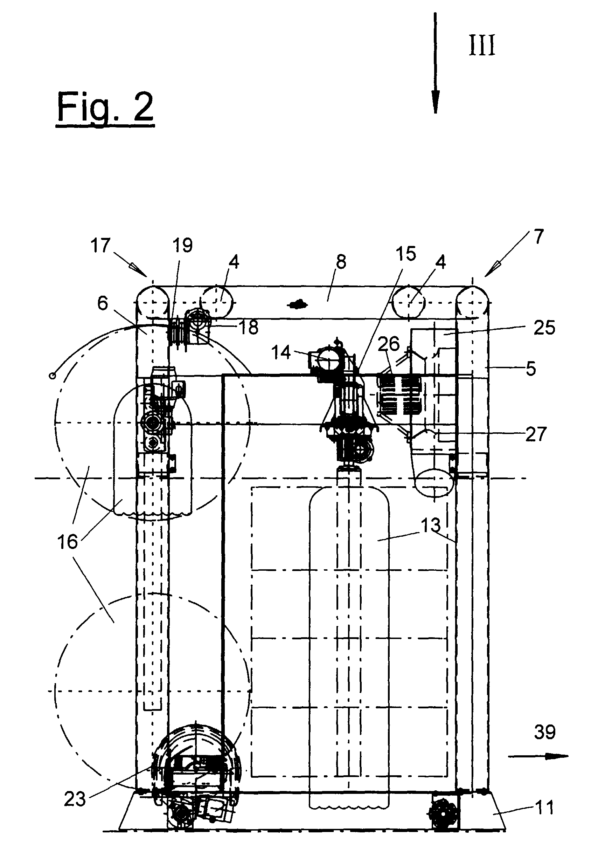

- Figur 2:: einen zentralen Längsschnitt durch die Anlage gemäß Schnittlinie II von Figur 1,
- Figur 3:: eine Draufsicht auf die Anlage gemäß Pfeil III von Figur 2 und
- Figur 4:: eine perspektivische Ansicht der Waschanlage.

In den Zeichnungen ist eine Fahrzeugwaschanlage (1) in verschiedenen Ansichten dargestellt, die als sogenannte Portalwaschanlage ausgebildet ist. Sie besitzt ein Portal (2), das auf bodenseitigen Schienen (nicht dargestellt) oder dergleichen gegenüber einem in der Regel stehenden Fahrzeug (40) entlang der Fahrtrichtung (39) vor und zurück bewegt wird. Anstelle der gezeigten Portalwaschanlage mit einem einzigen Portal (2) kann es sich auch um einen anderen Anlagentyp mit mehreren Portalen (2), z.B. um eine sogenannte Taktanlage handeln.

Das Portal (2) ist als offenes Rohrgestell ausgebildet, das aus zwei U-förmigen Rohrbügeln (5,6) besteht, die auf dem Kopf stehend quer zur Fahrtrichtung (39) angeordnet sind und im Kopf- und Fußbereich miteinander verbunden sind. Die Rohrbügel (5,6) bestehen jeweils aus zwei im wesentlichen vertikalen Ständern (3) und einem oben liegenden Querhaupt (4). Der Rohrquerschnitt ist vorzugsweise kreisrund oder oval.

Die Rohrbügel (5,6) sind in Fahrtrichtung (39) mit Abstand hintereinander angeordnet. Sie besitzen an ihren Querhäuptern (4) im mittleren Bereich jeweils gegeneinander gerichtete Krümmungen (7). Hier ist ein mittiges Verbindungsteil (8) angeordnet, das in Fahrtrichtung (39) die Querhäupter (4) miteinander verbindet. Die Rohrbügel (5,6) haben außerdem an den vertikalen Ständern (3) im Fußbereich eine Verbindung durch einen Längsträger (11). Dieser kann zugleich als Fahrwerk ausgebildet sein. Im oberen Ständerbereich sind jeweils zwei weitere Längsträger (10) vorhanden, die vorzugsweise eine Ausbauchung nach außen aufweisen und die Ständer (3) die Rohrbügel (5,6) in Längsrichtung miteinander verbinden und abstützen. Die Rohre sind am Übergang der Ständer (3) in die Querhäupter (4) mit einer weichen Abrundung versehen.

Bei dem offenen Rohrgestell (2) wird zumindest weitgehend auf die Anbringung von Verkleidungen verzichtet. Lediglich in Bereich der nachfolgend näher erläuterten Seitenbürsten (13) und der ausgebauchten Längsträger (10) kann jeweils ein schalenförmig gewölbter Spritzschutz (22) zwischen den Ständern (3) der Rohrbügel (5,6) vorhanden sein. Dieser ebenfalls nach außen ausbauchende Spritzschutz (22) kann durchsichtig sein und aus Acrylglas oder dergleichen bestehen. Der Spritzschutz (22) kann alternativ auch als Designelement dienen, indem er farblich von den anderen Anlagenkomponenten abgesetzt ist und eine Farbgebung mit Glitzereffekten oder anderen optischen Designmerkmalen hat. Der Spritzschutz (22) kann dann auch zumindest partiell undurchsichtig sein.

Die Fahrzeugwaschanlage (1) besitzt eine Wascheinrichtung (12), die vorzugweise als Bürstenwascheinrichtung ausgebildet ist und eine Trockeneinrichtung (24). Diese Aggregate sind an der Anlage sichtbar. Die anderen zugehörigen Anlagenbestandteile sind vorzugsweise weitgehend unsichtbar untergebracht. Insbesondere sind in den Rohrbügeln (5,6), vorzugweise in den Ständern (3), ein oder mehrere Sprüheinrichtungen (9) verborgen untergebracht. Von außen sieht man am Rohrumfang nur die Düsenköpfe.

Außerdem sind vorzugsweise die Steuerung (35) für die Fahrzeugwaschanlage (1) und deren Komponenten sowie die Betriebsmittelversorgung (36) außerhalb des Portals (2) angeordnet. Die Betriebsmittelversorgung besteht zum einen aus einer Energieversorgung mit Strom und gegebenenfalls auch mit Druckluft oder dergleichen. Die Betriebsmittelversorgung (36) beinhaltet außerdem Tanks, Mischeinrichtungen, Pumpenaggregate und sonstige Komponenten für die flüssigen Betriebsmittel, wie Wasser, Reinigungsmittel, Shampoo, Aktivschaum, Spülwasser, Trockenhilfe, Konservierungssubstanzen, Heißwachs etc. Von der externen Steuerung (35) und der Betriebsmittelversorgung (36) führen Leitungen (37) vorzugsweise in einem einzigen Bündel zentral zu einer Verteilung (34) am Portal (2), die vorzugsweise im Kopfbereich des Portals (2) auf dem Verbindungsteil (8) angeordnet ist. Die Leitungsverbindung (37) hat außerdem zur Verfolgung der Portalbewegungen einen geeigneten Kabelschlepp oder dergleichen (nicht dargestellt). Die Leitungen (37) sind vorzugsweise oben liegend im Kopfbereich des Portals (2) geführt und für den Waschkunden weitgehend unsichtbar.

Die Bürstenwascheinrichtung (12) besteht in der gezeigten Ausführungsform aus jeweils nur einer vertikal hängenden Seitenbürste (13) und einer horizontalen Dachbürste (16). Die Bürsten können allerdings auch doppelt vorhanden sein. Außerdem ist eine Radwascheinrichtung (23) an dem in der Anfangsfahrtrichtung (39) hinten liegenden Rohrbogen (6) angeordnet, der auch die Dachbürste (16) trägt.

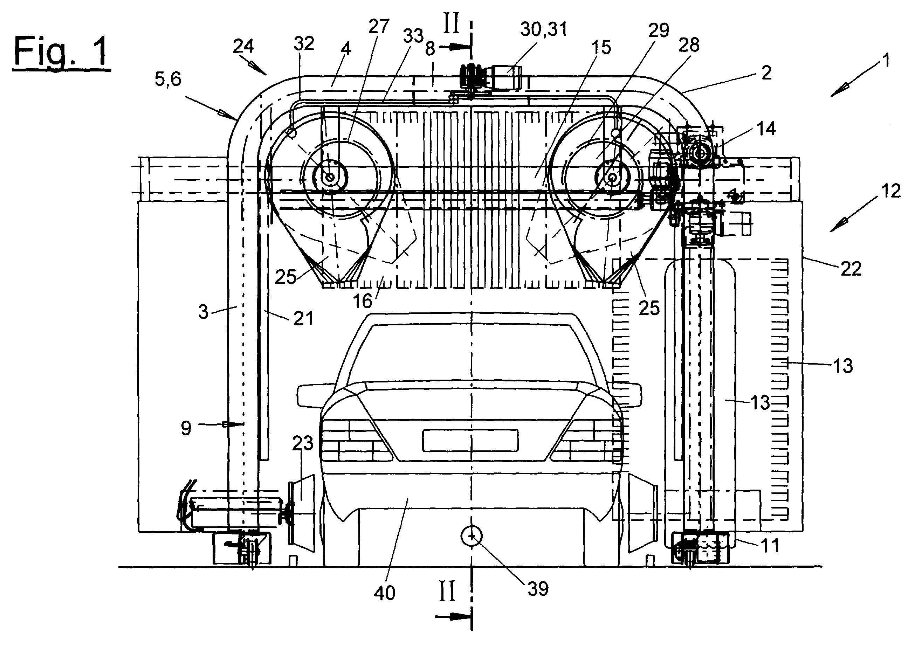

Für die Seitenbürste (13) ist ein Querträger (15) als Führungsschiene vorhanden, der zwischen den Rohrbögen (5,6) angeordnet und vorzugsweise an den beiden oben liegenden Längsträgern (10) abgestützt und befestigt ist. Der Querträger (15) kann als schmale, stehende und filigrane Vierkantschiene ausgebildet sein. Die Seitenbürste (13) besitzt ein Fahrwerk (14) mit einem geeigneten Antrieb, das auf dem Querträger (15) läuft. Die Seitenbürste (13) kann wie in Figur 1 ersichtlich bis auf Höhe der Ständer (3) nach außen gefahren werden, wobei die gewölbten Spritzschutze (22) die Seitenbürste (13) in den Ruhestellungen außenseitig umgeben und abdecken. In der in Figur 1 mit durchgezogenen Strichen dargestellten Ruhestellung ist die eingefallene Seitenbürste (13) zwischen den Ständern (3) bei der Einfahrt des Fahrzeugs (40) kaum sichtbar.

Die Dachbürste (16) besitzt eine vertikale Bürstenführung (21) an den Ständern (3) des Rohrbogens (6), in der sie mit ihrer Bürstenwelle vertikal auf und ab beweglich geführt ist. Für die Hubbewegungen ist ein Hubantrieb (17) vorhanden, der im Kopfbereich des Rohrbogens (6) angeordnet ist. Der Hubantrieb (17) besitzt einen geeigneten Motor (18) und einen Riemenwickel (19), der über zwei Riemen (20) die Dachbürste (16) hebt und senkt. Die Riemen (20) sind als glatte Riemen ausgebildet, die auf die Trommel des Riemenwickels (19) nebeneinander aufgewickelt werden. Der Motor (18) treibt den Riemenwickel (19) direkt an. Über eine randseitig gelochte Steuerscheibe mit einem Initiator oder Lochtaster können die Motor- und Wickelbewegungen überwacht und gesteuert werden (nicht dargestellt).

Die Riemen (20) sind mit der Bürstenwelle verbunden. Der eine kürzere Riemen (20) führt über geeignete Umlenkungen direkt zu der in den Zeichnungen linken Bürstenführung (21). Der andere längere Riemen (20) ist entlang des Querhauptes (4) vom Rohrbogen (6) verlegt und über geeignete Umlenkungen zur gegenüberliegenden Bürstenführung (21) geführt. Die Riemen (20) können auf die Trommel des Riemenwickels (19) gleichsinnig oder gegensinnig gewickelt werden. Vorzugsweise hat die Trommel zwei Wickelbereiche nebeneinander, so daß die Riemen (20) unmittelbar benachbart auf- und abgewickelt werden. Beide Riemen (20) werden vorzugsweise vom gleichen Riemenwickel (19) betätigt. Die gezeigte Hubeinrichtung (17) kann auch bei anderen beliebig gestalteten Fahrzeugwaschanlagen und in Verbindung mit anderen, insbesondere konventionellen Portalen eingesetzt werden.

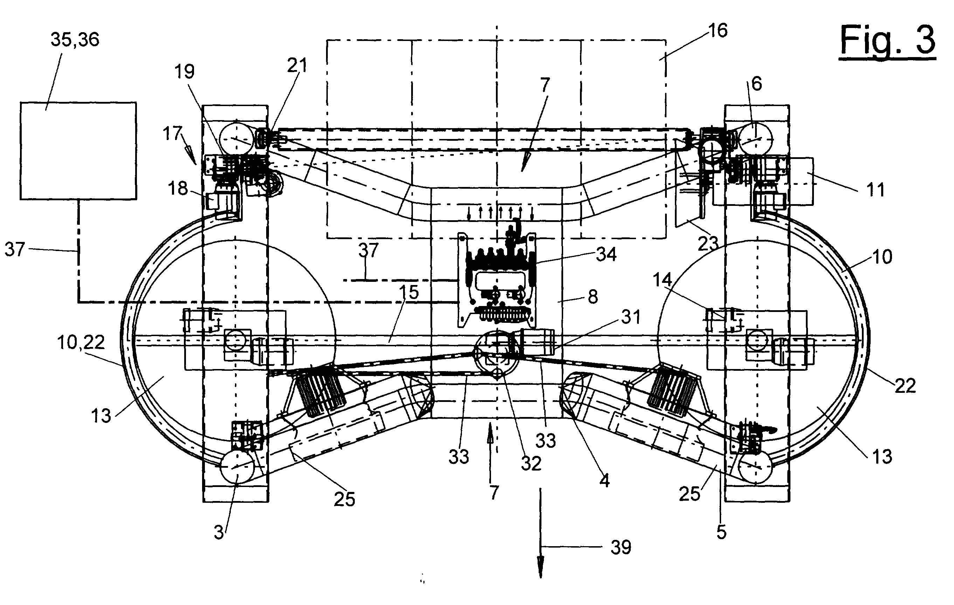

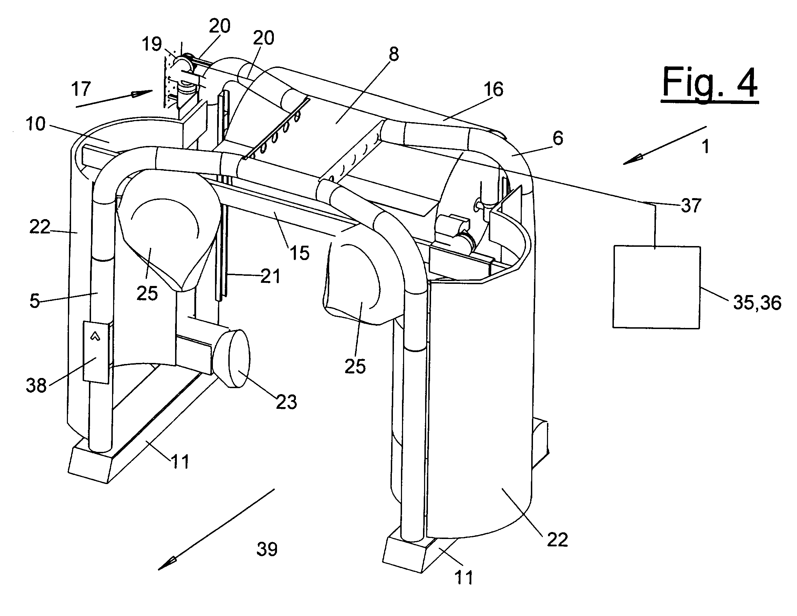

Die Trockeneinrichtung (24) besteht vorzugsweise aus mindestens einer, vorzugsweise zwei schwenkbar im Kopfbereich des vorderen Rohrbogens (5) gelagerten Trockendüsen (25). Die kleinbauenden Trockendüsen (25) beinhalten das Düsengehäuse und ein integriertes Gebläse (26). Die Trockendüsen (25) sind vorzugsweise in der bikopfseitigen Biegung und am Übergang zwischen Ständer (3) und Querhaupt (4) angeordnet. In diesem Bereich beginnt bereits die Krümmung (7), so daß die Trockendüsen (25) die in Figur 3 und 4 gezeigte Schräglage gegenüber der Fahrtrichtung (39) haben.

Die Trockendüsen (25) sind schräg nach unten gerichtet und blasen nach unten auf das Fahrzeug (40). Die Trockendüsen (25) sind dabei schwenkbar und insbesondere oszillierend beweglich. Sie besitzen dazu ein Schwenklager (27), das über einen Ausleger oder dergleichen (vergleiche Figur 1) am Rohrbogen (5) hängend angeordnet ist. Das Schwenklager besitzt einen vorzugsweise stationär mit dem Rohrbogen (5) verbundenen kreisrunden Führungsring (28), in oder auf dem drei gleichmäßig verteilte Führungsrollen (29) laufen und über Spurkränze formschlüssig geführt sind. Die Führungsrollen (29) sind mit dem Gehäuse der Trockendüse (25) verbunden.

Für die Schwenkbewegung ist ein Schwenkantrieb (30) vorgesehen, der zur Düsenbetätigung vorzugsweise einen Kurbeitrieb (32) aufweist. Der Motor (31) ist mittig am Verbindungsteil (8) angeordnet und treibt eine Stellscheibe oder dergleichen des Kurbeltriebs (32). Von hier aus führen die Lenker (33) in geeigneter Weise zu den beiden Trockendüsen (25), die durch den Schwenkantrieb (30) rhythmisch und vorzugsweise gegensinnig um eine vorzugsweise horizontale und schräg zur Fahrtrichtung (39) gerichtete Achse hin und hergedreht werden. Figur 1 zeigt die verschiedenen Düsenstellungen.

In Figur 1 und 3 besitzt der Kurbeltrieb (32) eine vom Motor (31) getriebene Kurbelscheibe, von der die Lenker (33) zu den Trockendüsen (25) führen. Die Kurbeischeibe hat hier eine vertikale Drehachse. In einer alternativen und nicht dargestellten Ausführungsform kann der Kurbeltrieb (32) auch unterteilte Lenker (33) mit einem Zwischenhebel besitzen. Die Drehbewegungen der Kurbeischeibe werden dann über kurze Lenker zu diesen Zwischenhebeln übertragen, die eine schräge oder aufrecht stehende Lage und eine im wesentlichen horizontale Schwenkachse mit schräger Ausrichtung zur Fahrtrichtung (39) haben. Von diesen schwenkbaren Zwischenhebeln können entsprechende weitere Lenker zu den Gehäusen der Trockendüsen (25) führen. Bei dieser Lenkeranordnung ist die Kinematik und insbesondere die Vertikalkomponente der Lenkerbewegungen in Verbindung mit einem optimierten Kraft- und Bewegungsangriff an den Trockendüsen (25) verbessert. Die beschriebene Trockeneinrichtung (24) mit den Trockendüsen (25) und dem Kurbelantrieb können auch bei anderen Fahrzeugwaschanlagen (1) und in Verbindung mit anderen Portalen, insbesondere konventionellen Portalen, eingesetzt werden.

Die Fahrzeugwaschanlage (1) kann nach weitere Anlagenkomponenten besitzen. Zum Beispiel ist am eingangsseitigen Rohrbogen (5) eine Einfahrhilfe (38) für den Waschkunden angeordnet. Dies kann eine optische Signaleinrichtung, z.B. eine Ampel oder eine Pfeilsignalanlage sein, die dem Kunden Richtungshinweise zur korrekten Einfahrt und Positionierung des Fahrzeugs (40) in der Fahrzeugwaschanlage (1) vermittelt. Die Einfahrhilfe (38) kann ansonsten auch in beliebig anderer geeigneter Weise ausgestaltet sein.

Die in den Zeichnungen dargestellte Fahrzeugwaschanlage (1) ist als Grundbauform ausgebildet und besitzt die wichtigsten Anlagenaggregate. Diese abgespeckte Bauform ist aus optischen Gründen besonders vorteilhaft, weil nur wenige Aggregate sichtbar sind und weil dadurch die filigrane offene Rohrkonstruktion gut zur Wirkung kommt. Alternativ können aber auch weitere Aggregate vorhanden sein, z.B. eine Hochdruckwascheinrichtung mit Dach- und Seitendüsen. Diese Hochdruckwascheinrichtung kann zusätzlich oder alternativ zur Bürstenwascheinrichtung vorhanden sein. Bei der bevorzugten Ausführungsform der Waschanlage (1) wird aus Designgründen auf eine heb- und senkbare Dachdüse bei der Trockeneinrichtung verzichtet. Alternativ kann eine solche aber auch bei einer anderen Ausführungsform vorhanden sein und gegebenenfalls mit einem Auftragsrohr für Reinigungsmittel oder gegebenenfalls auch mit einer Dachdüse für die Hochdruckwäsche kombiniert sein. Darüber hinaus sind weitere Abwandlungen der gezeigten Ausführungsform möglich. Diese betreffen zum einen die Gestaltung des Rohrgestells (2) und der Verbindung der einzelnen Rohrelemente, zum anderen können auch die Steuerung und/oder die Betriebsmittelversorgung an geeigneter Stelle integriert sein. Ferner ist es möglich, die Waschbürsten und gegebenenfalls andere Aggregatteile mehrfach anzuordnen.

### BEZUGSZEICHENLISTE

- 1: Fahrzeugwaschanlage
- 2: Portal, Rohrgestell
- 3: Ständer
- 4: Querhaupt
- 5: Rohrbogen
- 6: Rohrbogen
- 7: Krümmung
- 8: Verbindungsteil, mittig
- 9: Sprüheinrichtung
- 10: Längsträger, obenliegend
- 11: Längsträger, Fahrwerk
- 12: Bürstenwascheinrichtung
- 13: Seitenbürste
- 14: Fahrwerk, Antrieb
- 15: Querträger, Führungsschiene
- 16: Dachbürste
- 17: Hubantrieb
- 18: Motor
- 19: Riemenwickel
- 20: Riemen
- 21: Bürstenführung
- 22: Spritzschutz
- 23: Radwascheinrichtung
- 24: Trockeneinrichtung
- 25: Trockendüse
- 26: Ventilator, Gebläse
- 27: Schwenklager
- 28: Führungsring
- 29: Führungsrolle
- 30: Schwenkantrieb
- 31: Motor
- 32: Kurbeitrieb
- 33: Lenker
- 34: Verteilung
- 35: Steuerung
- 36: Betriebsmittelversorgung
- 37: Leitung, Leitungsverbindung
- 38: Einfahrhilfe
- 39: Fahrtrichtung
- 40: Fahrzeug

## Patentansprüche

1. Fahrzeugwaschanlage mit mindestens einem beweglichen Portal, **dadurch gekennzeichnet,** daß das Portal (2) als offenes Rohrgestell mit zwei U-förmigen Rohrbügeln (5,6) ausgebildet ist, die im Fuß- und Kopfbereich miteinander verbunden sind.

2. Fahrzeugwaschanlage nach Anspruch 1, **dadurch gekennzeichnet,** daß die Rohrbügel (5,6) quer zur Fahrtrichtung (39) angeordnet sind und in der Mitte gegeneinander gerichtete Krümmungen (7) und ein mittiges Verbindungsteil (8) aufweisen.

3. Fahrzeugwaschanlage nach Anspruch 1 oder 2, **dadurch gekennzeichnet,** daß die Rohrbügel (5,6) an den vertikalen Ständern (3) im Fußbereich durch zwei Fahrwerke (11) und im oberen Bereich durch zwei ausgebauchte Längsträger (10) miteinander verbunden sind.

4. Fahrzeugwaschanlage nach Anspruch 1, 2 oder 3, **dadurch gekennzeichnet,** daß in den Rohrbügeln (5,6) mindestens eine Sprüheinrichtung (9) angeordnet ist.

5. Fahrzeugwaschanlage nach einem der Ansprüche 1 bis 4, **dadurch gekennzeichnet,** daß die Steuerung (35) und die Betriebsmittelversorgung (36) außerhalb des Portals (2) angeordnet ist, wobei die Leitungen (37) im Bündel zu einer Verteilung (34) auf dem Verbindungsteil (8) geführt sind.

6. Fahrzeugwaschanlage nach einem der Ansprüche 1 bis 5, **dadurch gekennzeichnet,** daß eine Bürstenwascheinrichtung (12) mit jeweils mindestens einer Dach- und Seitenbürste (13,16) vorgesehen ist, wobei die Seitenbürste(n) (13) an einem zwischen den Rohrbügeln (5,6) angeordneten Querträger (15) verfahrbar angeordnet ist, der mit den obenliegenden Längsträgern (10) verbunden ist.

7. Fahrzeugwaschanlage nach einem der Ansprüche 1 bis 6, **dadurch gekennzeichnet,** daß die Dachbürste(n) jeweils an einem Rohrbügel (5,6) höhenverstellbar gelagert ist/sind.

8. Fahrzeugwaschanlage nach einem der Ansprüche 1 bis 7, **dadurch gekennzeichnet,** daß die Dachbürste (16) einen Hubantrieb (17) mit einem Riemenwickel (19) aufweist.

9. Fahrzeugwaschanlage nach einem der Ansprüche 1 bis 8, **dadurch gekennzeichnet,** daß für die Waschbürsten (13,16) jeweils ein gewölbter Spritzschutz (22) vorgesehen ist.

10. Fahrzeugwaschanlage nach einem der Ansprüche 1 bis 9, **dadurch gekennzeichnet,** daß eine Trockeneinrichtung (24) mit mindestens einer, vorzugsweise zwei, schwenkbar im Dachbereich gelagerten Trockendüsen (25) vorgesehen ist.

11. Fahrzeugwaschanlage nach einem der Ansprüche 1 bis 10, **dadurch gekennzeichnet,** daß die Trockendüsen (25) ein integriertes Gebläse (26) und einen Schwenkantrieb (30) aufweisen.

12. Fahrzeugwaschanlage nach einem der Ansprüche 1 bis 11, **dadurch gekennzeichnet,** daß der Schwenkantrieb (30) einen Kurbeltrieb (32) für eine oszillierende Düsenbewegung aufweist.

13. Fahrzeugwaschanlage nach einem der Ansprüche 1 bis 12, **dadurch gekennzeichnet,** daß die Trockendüsen (25) ein Schwenklager (27) mit einem Führungsring (28) und mehreren daran angeordneten Führungsrollen (29) aufweist.
